# EUROPEAN PATENT APPLICATION

(11) **EP 2 618 469 A1**
(43) Date of publication of application: **24.07.2013**
(21) Application number: 12151707.2
(22) Date of filing: 19.01.2012
(51) Int. Cl.: H02M 1/42

(54) **Convergence type power supply device**

(71) Applicant: Mao, Lih-Wen, New Taipei City 221 (TW)
(72) Inventor: Mao, Lih-Wen, New Taipei City 221 (TW)
(74) Representative: Pallini, Diego

(57) **Abstract**

A convergence type power supply device includes a supply circuit and a filter circuit, and both circuits receive a rectified pulse DC power, and the supply circuit supplies the pulse DC power to a load directly when the filter circuit is charged, and the voltage of the pulse DC power becomes higher after the filter circuit is charged, and the filter circuit filters the pulse voltage to supply a filter DC to the load, so as to achieve the effect of enhancing the power factor.

## Description

### FIELD OF THE INVENTION

The present invention relates to a power supply device, in particular to a convergence type power supply device.

### BACKGROUND OF THE INVENTION

Most electronic devices (including televisions, stereos, and computers, etc) adopt direct current (DC) as the power for internal components, and thus it is necessary to have a power supply device (or a rectifier) to convert alternate current (AC) into various different DC voltages to maximize the performance of the electronic devices or electric appliances.

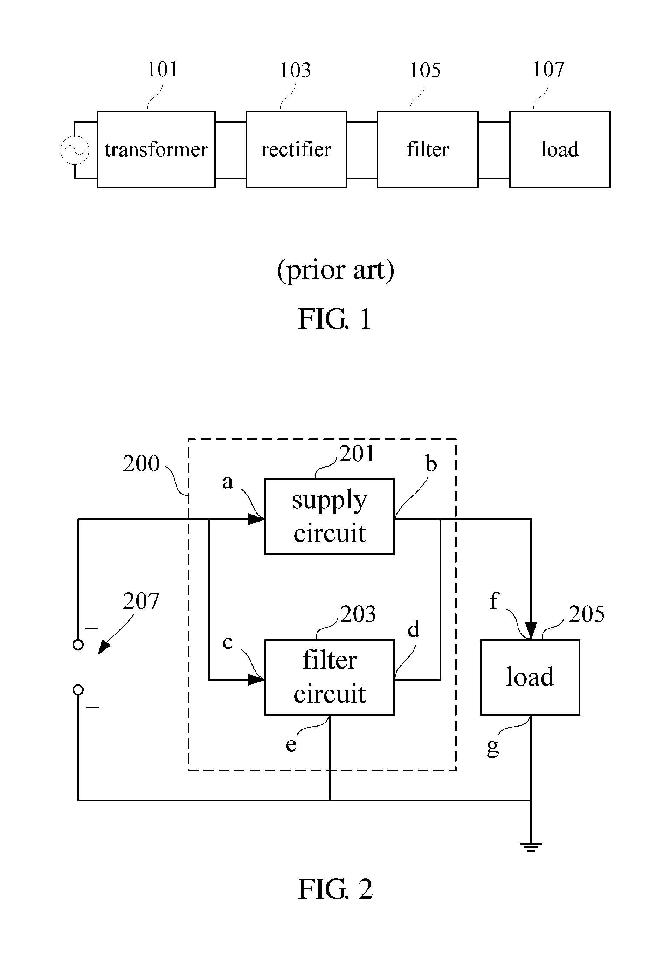

With reference to FIG. 1 for a functional block diagram of a power supply circuit, an AC voltage passing through a transformer 101 is rectified by a rectifier 103 to generate a constant DC voltage with a pulse variation, and then filtered by a filter 105 to lower the DC potential of the pulse variation and finally supplied to a load 107. Further, a regulator (not shown in the figure) can be installed between the filter 105 and the load to regulate the power to obtain a constant DC voltage.

In recent years, power supplies emphasize on improving the conversion efficiency, and the performance of power factor relates to the power transmission efficiency of the whole system. In general, a conventional filter is implemented by a capacitor. The larger the capacitance, the better is the filtering effect. However, the larger the capacitance, the larger is the volume. Therefore, there is a solution to improve the filtering effect by adding a resistor, but the serial connection of a filter resistor and a load resistor of a resistor-capacitor filter circuit will attenuate the DC voltage output. As a result, the power factor is reduced instead.

### SUMMARY OF THE INVENTION

It is a primary objective of the present invention to provide a convergence type power supply device with a high power factor and a filter effect.

To achieve the aforementioned and other objectives, the present invention provides a convergence type power supply device applied for supplying a full-wave rectified pulse DC power to a load, and the convergence type power supply comprises: a supply circuit, having two terminals, one being a first terminal coupled to a positive electrode of the pulse DC power, and the other one being a second terminal coupled to an input terminal of the load, and the supply circuit being provided for outputting the pulse DC power to the load; and a filter circuit, having three terminals, one being a first terminal coupled to a positive electrode of the pulse DC power, one being a second terminal coupled to an input terminal of the load and the second terminal of the supply circuit, and one being a third terminal coupled to an output terminal of the load and a negative electrode of the pulse DC power, and the filter circuit being used for providing a filter output that reduces a ripple component of the pulse DC power, and converging together with an output of the supply circuit to the load.

In a preferred embodiment, the supply circuit includes a first diode, wherein the first diode has a forward bias terminal coupled to a first terminal of the supply circuit, and a reverse bias terminal coupled to a second terminal of the supply circuit.

In a preferred embodiment, the filter circuit includes: an inductor, having two terminals, one being a first terminal coupled to a first terminal of the filter circuit; a capacitor, having two terminals, one being a first terminal coupled to a second terminal of the inductor, and the other one being a second terminal coupled to a third terminal of the filter circuit; and a second diode, having a forward bias terminal coupled to a second terminal of the inductor and a first terminal of the capacitor, and a reverse bias terminal coupled to a second terminal of the filter circuit.

The convergence effect of the filter circuit and the supply circuit is adopted in this invention, so that when the filter circuit is charged, the supply circuit supplies the pulse DC power to the load directly, and after the filter circuit is charged and if the voltage is higher than the pulse DC power, the filter circuit filters the pulse voltage and supplies a filter DC (filter output) to the load, so as to achieve the effect of enhancing the power factor.

### BRIEF DESCRIPTION OF THE DRAWINGS

FIG. 1 is a functional block diagram of a pulse DC power supply circuit;

FIG. 2 is a functional block diagram of a convergence type power supply device in accordance with a preferred embodiment of the present invention; and

FIG. 3 is a circuit diagram of a convergence type power supply device in accordance with a preferred embodiment of the present invention.

### DETAILED DESCRIPTION OF THE PREFERRED EMBODIMENTS

The objects, characteristics and effects of the present invention will become apparent with the detailed description of the preferred embodiments and the illustration of related drawings as follows.

With reference to FIG. 2 for a functional block diagram of a convergence type power supply device in accordance with a preferred embodiment of the present invention, after an AC power is processed by an all-wave rectification (such as using a bridge rectifier or any other equivalent rectifier) to produce a pulse DC power 207, the present invention processes the pulse DC power 207 and supplies the processed pulse DC power to a back-end load 205. In the present invention, a regulator (not shown in the figure) can be installed between the convergence type power supply device 200 and the load 205 to regulate the power to obtain a constant DC voltage.

The convergence type power supply device 200 comprises a supply circuit 201 and a filter circuit 203. After both supply circuit 201 and filter circuit 203 receive the rectified pulse DC power 207, the supply circuit 201 is provided for outputting the pulse DC power 207 directly. If the convergence type power supply device 200 is connected to the load 205 directly, the output of the convergence type power supply device 200 will be supplied to the load 205 directly; and if any device is installed between the convergence type power supply device 200 and the load 205, the output of the convergence type power supply device 200 will be supplied to the load 205 indirectly. After receiving the rectified pulse DC power, the filter circuit 203 is also provided for reducing a filter DC (which is the output after being filtered) of a ripple component of the pulse DC power 207, and converging with the output of the supply circuit 201 to the load 205. The filter circuit 203 includes three terminals for providing a filter output of a ripple component of the pulse DC power 207 and converging with the output of the supply circuit 201 to the load 205.

In FIG. 2, the supply circuit 201 includes two terminals, one being a first terminal a coupled to a positive electrode of the pulse DC power 207, and the other being a second terminal b coupled to the load 205. In the three terminals of the filter circuit 203, the first terminal c is coupled to the positive electrode of the pulse DC power 207, and a second terminal d is coupled to an input terminal of the load 205 and the second terminal b of the supply circuit 204, and a third terminal e is coupled to an output terminal g of the load 205 and a negative electrode of the pulse DC power 207.

The present invention uses the convergence of the circuits provided by two types of power supplies to provide the power factor. Since the voltage phase of the pulse DC power 207 supplied by the filter circuit 203 has a delay, the supply circuit 201 supplies the pulse DC power 207 to the load 205 during the delay period. After the filter circuit 203 is charged and the voltage is accumulated to a level higher than the voltage supplied by the supply circuit 201 (now, the pulse voltage value is higher than the pulse DC power), the filter circuit 203 will automatically take over to supply the filter DC to the load 205. Therefore, the use of the filter circuit 203 and the characteristics of the supply circuit 201 can achieve a better power supply efficiency.

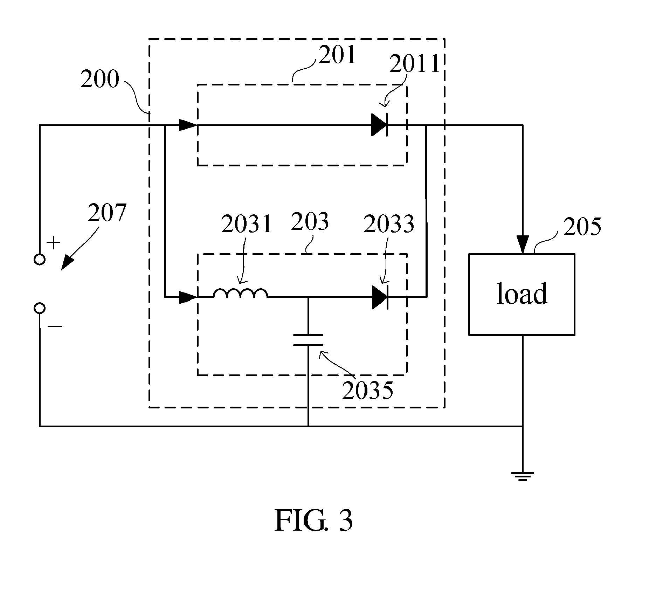

With reference to FIG. 3 for a circuit diagram of a convergence type power supply device in accordance with a preferred embodiment of the present invention as well as FIG. 2, the supply circuit 201 of the preferred embodiment comprises a first diode 2011, wherein the first diode 2011 has a forward bias terminal coupled to a first terminal a of the supply circuit 201 and a reverse bias terminal coupled to a second terminal b of the supply circuit 201.

The filter circuit 203 includes an inductor 2031, a capacitor 2035, and a second diode 2033. The first terminal of the two terminals of the inductor 2031 is coupled to a first terminal c of the filter circuit 203; the first terminal of the two terminals of the capacitor 2035 is coupled to a second terminal of the inductor 2031; the second terminal of the capacitor 2035 is coupled to a third terminal d of the filter circuit 203; and the second diode 2033 has a forward bias terminal coupled to a second terminal of the inductor 2031 and a first terminal of the capacitor 2035 and a reverse bias terminal coupled to a second terminal d of the filter circuit 203. The inductor 2031 is used for controlling the convergence type power supply device 200, such that if the voltage phase point of the output characteristic is lower than this voltage phase point, then the output of the convergence type power supply device 200 will be supplied by the filter circuit 203, or else the output of the convergence type power supply device 200 will be provided by the supply circuit 201, so that the inductor 2031 can serve as a critical inductance to control the critical point for the control of the output and switching.

In the preferred embodiment of the present invention, the advantages of the direct output of the high power factor of the pulse DC power 207 and the stable DC power supply of the filter circuit 203 are combined. The advantage of the high power factor is used to compensate the power loss of the filter circuit 203. Since the output voltage of the LC filter circuit has not been lost too much, and the supply circuit is provided for supplying the pulse DC power 207, therefore the power factor can reach up to 90%.

While the invention has been described by means of specific embodiments, numerous modifications and variations could be made thereto by those skilled in the art without departing from the scope and spirit of the invention set forth in the claims.

## Claims

1. A convergence type power supply device, applied for supplying a full-wave rectified pulse DC power to a load, comprising:
a supply circuit, having two terminals, one being a first terminal coupled to a positive electrode of the pulse DC power, and the other one being a second terminal coupled to an input terminal of the load, and the supply circuit being provided for outputting the pulse DC power to the load; and
a filter circuit, having three terminals, one being a first terminal coupled to a positive electrode of the pulse DC power, one being a second terminal coupled to an input terminal of the load and the second terminal of the supply circuit, and one being a third terminal coupled to an output terminal of the load and a negative electrode of the pulse DC power, and the filter circuit being used for providing a filter output that reduces a ripple component of the pulse DC power, and converging together with an output of the supply circuit to the load.

2. The convergence type power supply device of claim 1, wherein the supply circuit includes a first diode, and the first diode has a forward bias terminal coupled to a first terminal of the supply circuit and a reverse bias terminal coupled to a second terminal of the supply circuit.

3. The convergence type power supply device of claim 2, wherein the filter circuit comprises:
an inductor, having two terminals, one being a first terminal coupled to a first terminal of the filter circuit;
a capacitor, having two terminals, one being a first terminal coupled to a second terminal of the inductor, and the other one being a second terminal coupled to a third terminal of the filter circuit; and
a second diode, having a forward bias terminal coupled to a second terminal of the inductor and a first terminal of the capacitor, and a reverse bias terminal coupled to a second terminal of the filter circuit.
